# EUROPEAN PATENT APPLICATION

(11) **EP 1 725 025 A1**
(43) Date of publication of application: **22.11.2006**
(21) Application number: 05253027.6
(22) Date of filing: 18.05.2005
(51) Int. Cl.: H04N 5/235, H04N 3/15

(54) **Method for operating an electronic imaging system, and electronic imaging system**

(71) Applicant: STMicroelectronics (Research & Development) Limited, Marlow, Buckinghamshire SL7 1YL (GB)
(72) Inventor: Holmes, Andrew, Edinburgh (GB); Hurwitz, J. E. D., Edinburgh EH13 0JT (GB)
(74) Representative: Cooper, John

(57) **Abstract**

An electronic imaging system (10) is provided with a sensing device (34) between a reset supply (14) and a pixel array (12). While the pixels of the array (12) are held in reset, the varying current supplied by the reset supply (14) is monitored in order to provide information on scene changes.

## Description

The present invention relates to a method of operating an electronic imaging system, and an electronic imaging system adapted to carry out the method.

Electronic imaging systems include arrays of light sensitive elements which convert incoming light to a signal suitable for electronic processing. In particular, an electronic imaging system can be a solid state image sensor such as a CMOS or CCD image sensor.

Electronic imaging systems are incorporated in a wide variety of host systems, which can include complex equipment such as desktop, laptop and notebook computers, or devices such as digital cameras, monitoring and surveillance equipment, mobile phones and optical mice, to name but a few.

For all of these host systems, power consumption has to be minimised in order to maximise battery life or decrease running costs. If a host system is operating to user inputs or performing operations on objects, then if neither the user or external objects are present the system can power down to reduce energy consumption.

When the user inputs or external objects then reappear, the system has to power up once more. In one example, a computer can go into a sleep mode, whereby its screen and other components such as a webcam are powered down. The computer can then be re-awakened when a certain action happens, such as a key being pressed or a mouse being moved.

However, this method of using an external input to "re-awaken" a sleeping or powered down system is not always the most efficient or practical solution. It is desirable in some situations to use the electronic imaging system itself to detect the change in light level. This is currently achieved by sampling and processing either the entire pixel array or a subset of pixels of an electronic imaging system to compare a previous light level with a new light level.

However, these methods require the image readout circuitry to be operating, which consumes a relatively high amount of power. It is therefore desirable to find a way of producing an electronic imaging system that has an in-built capability for detecting scene change, that has a further reduced power consumption.

According to a first aspect of the present invention, there is provided a method of operating an electronic imaging system comprising an pixel array comprising the steps of: holding the pixel array in reset; monitoring the reset current supplied to the pixel array and deriving scene information from the variations in reset current.

Preferably the method further comprises the step of generating a command signal for a host system, based on the scene information.

Preferably, the scene information comprises a brightness level and the command signal is used to re-activate a host system that is in a power-saving mode.

Preferably, the scene information is used to determine a background lighting flicker frequency.

Preferably, the method is applied individually to specific sub-sections of the pixel array.

Preferably, the outputs from each specific sub-section of the array are combined to give region-specific information.

According to a second aspect of the present invention, there is provided an electronic imaging system comprising a pixel array, each pixel in the array comprising a radiation sensitive element, a reset switch means and read switch means, said switch means being operable to configure the pixel in either a read, reset or integration mode; and a reset current supply provided to counteract the voltage generated by said light sensitive elements when said pixels are in a reset mode, characterised in that the electronic imaging system further comprises a sensing device (34) for monitoring the reset current.

Preferably, the sensing device comprises a plurality of sense elements, each element being operable to monitor the reset current supplied to a specific sub-section of the pixel array.

Preferably, the sensing device can communicate with an interface of an external host device.

Preferably, the external host device is a computer.

The present invention will now be described, by way of example only, with reference to the accompanying drawings, in which:
Fig. 1 illustrates an electronic imaging system in a prior art configuration;
Fig. 2 illustrates an electronic imaging system in a reset configuration;
Fig. 3 illustrates a detection circuit according to a first embodiment of the invention; and
Fig. 4 illustrates a detection circuit according to a second embodiment of the invention.

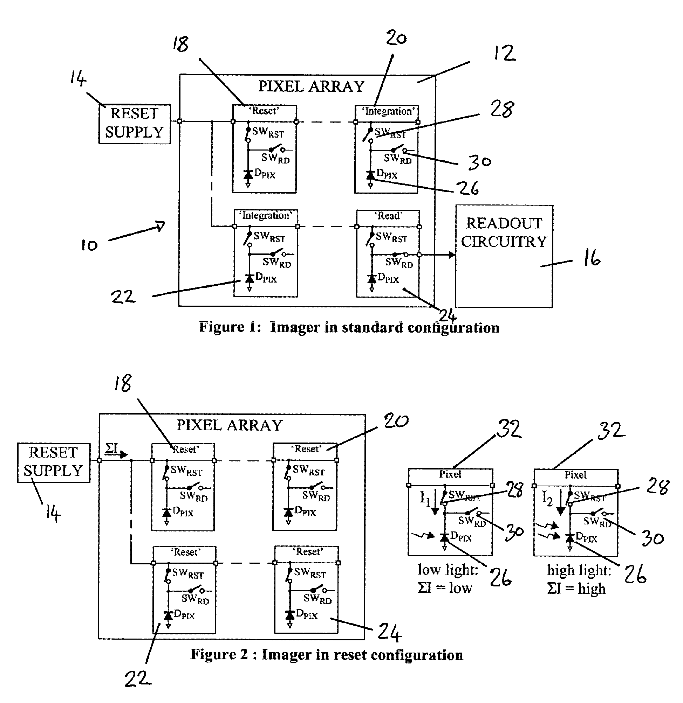

Fig. 1 schematically illustrates a standard, high power, operating mode of an electronic imaging system 10. The electronic imaging system 10 comprises a pixel array 12 (i.e. a light detecting circuit), with a reset current supply 14 and readout circuitry 16. Four sample pixels 18,20,22,24 are shown, each of which comprises a photodiode 26, a reset switch 28, and a read switch 30. It will be appreciated that the pixel array 12 will in fact typically comprise a much larger array of pixels. Also, it will be appreciated that only selected components of the electronic imaging system 10 and each pixel 18,20,22,24 have been illustrated.

A high resolution image is captured as follows: Firstly, the photodiode 26 is reset to a known level by closing the reset switch 28, as illustrated by pixel 18. Then, after some given integration period during which both the reset switch 28 and read switch 30 are left open (illustrated by pixels 20 and 22), the read switch 30 is closed so that the pixel value can be processed by the readout circuitry 16. This readout stage is illustrated by pixel 24.

When the electronic imaging system 10 is in its low power state the pixel array 12 (light detecting circuit) is not being read and so is held in reset. The pixel array 12 addressing scheme (not shown), readout circuitry 16 such as an analogue to digital convertor, and the column current sources (not shown) are powered down, and read switches 30 are held open. All the current required to hold the pixel array 12 in reset, denoted by ΣI in Fig. 2, is supplied by the reset current supply 14. This is illustrated in Fig. 2, wherein the reset switches 28 in pixels 18,20,22,24 are closed.

As shown on the right hand side of Fig. 2, the amount of current from the reset current supply will vary depending on the current consumption of the photodiodes 22, which in turn depends on the level of light exposed to the entire pixel array 12. In a low light condition, a first current I₁ is applied to a pixel 32 by the reset supply 14 in order to counteract the signal generated by the photodiode 26 and keep the pixel 32 at the known reset level, while in a high light condition, a second current I₂ is applied to a pixel 32 by the reset supply 14 in order to counteract the signal generated by the photodiode 26 and keep the pixel 32 at the known reset level. I2 will have to be of greater magnitude than I1, as the voltage generated by the photodiode 26 will be greater under the higher light level.

Therefore, considering the entire pixel array, it can be seen that ΣI varies according to the light level incident on the pixel array 12.

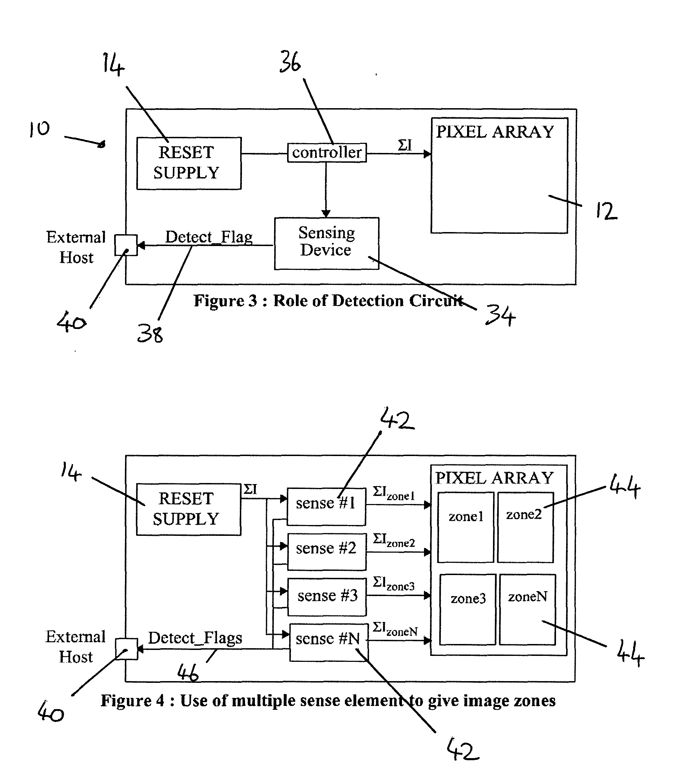

This varying current can be measured even when the electronic imaging system 10 is operating at low power mode, with the full sensor readout circuitry powered down. In a first embodiment, the variation in current ΣI, and hence incident light level, can then be detected and measured using an internal sensing device 34, as schematically illustrated in Fig. 3.

As shown in Fig. 3, an electronic imaging system 100 according to the first embodiment of the invention comprises a reset current supply 14, which is optionally regulated by a controller 36. A sensing device 34 monitors the total current ΣI that is supplied to the pixel array 12 by the reset supply 14, and sends a feedback signal 38 to an interface 40 of an external host, which is part of the external system in which the electronic imaging system 100 is incorporated.

Any suitable device such as an ammeter may be used for the sensing device 34. Similarly, the scope of the invention is not limited to any particular way of deriving information about scene change from the variation in the reset current. However, in one example, a differentiator could be configured such that a step change of a predetermined sufficient magnitude in the reset current would result in an impulse being generated that could trigger a digital latch into a high state to act as a detect flag.

A second embodiment of the invention is illustrated in Fig. 4. The reset power lines are grouped in a given arrangement, and the sensing device is comprised of a plurality of sense elements 42, each of which is arranged to monitor current supplied to pixels in the array 12 that correspond to specific sub-sections 44. Each sense element 42 can send its own feedback signal 46 to the interface 40 of the external host. A controller (not shown) can be provided to select a single feedback line, or any combination thereof for output to the interface 40, thereby allowing the monitoring of separate zones within the imaging array 12. This approach gives more information as compared with the embodiment shown in Fig. 3 to allow better detection of scene change.

Therefore, a low power approach to detecting scene/object change by monitoring the current consumed by an electronic imaging system core held in reset is provided.

The embodiments described above can be used to implement a method of detecting a scene change in a number of ways. In one sense, there is provided a means to detect the motion of an object in everyday lighting conditions. The principle can also be extended to other applications requiring a low power method of reporting a coarse measure of scene content. Such applications might include monitoring the mean illumination level of a scene, determining the frequency of background lighting flicker, or detecting whether a mechanical shutter is open or closed.

If an external system is operating to user inputs or performing operations on objects, then if neither the user or external objects are present the system can power down to reduce energy consumption. The system of the above embodiments can then be used as an object detecting unit to detect this state and power down the system and power up the system again when a new task needs carrying out and do this without using much power. The external system as a whole can therefore save power since the system of the above embodiments operates when the imaging array is at an off state.

Improvements and modifications can be incorporated to the above without departing from the scope of the invention.

## Claims

1. A method of operating an electronic imaging system (10) comprising a pixel array (12) comprising the steps of: holding the pixel array (12) in reset; monitoring the reset current supplied to the pixel array (12) and deriving scene information from the variations in reset current.

2. The method of claim 1, further comprising the step of generating a command signal (38,46) for a host system, based on the scene information.

3. The method of claim 2, wherein the scene information comprises a brightness level and the command signal (38,46) is used to re-activate a host system that is in a power-saving mode.

4. The method of claim 2, wherein the scene information is used to determine a background lighting flicker frequency.

5. The method of any preceding claim, applied individually to specific sub-sections (44) of the pixel array (12).

6. The method of claim 5, wherein the outputs from each specific sub-section (44) of the array (12) are combined to give region-specific information.

7. An electronic imaging system (10) comprising a pixel array (12), each pixel (18,20,22,24,32) in the array (12) comprising a radiation sensitive element (26), a reset switch means (28) and read switch means (30), said switch means (28,30) being operable to configure the pixel (18,20,22,24,32) in either a read, reset or integration mode; and a reset current supply (14) provided to counteract the voltage generated by said light sensitive elements (26) when said pixels (18,20,22,24,32) are in a reset mode, **characterised in that** the electronic imaging system (10) further comprises a sensing device (34) for monitoring the reset current.

8. The electronic imaging system of claim 7, wherein the sensing device (34) comprises a plurality of sense elements (42), each element (42) being operable to monitor the reset current supplied to a specific sub-section (44) of the pixel array (12).

9. The electronic imaging system of claim 7 or claim 8, wherein the sensing device (34) can communicate with an interface (40) of an external host device.

10. The electronic imaging system of claim 9, wherein the external host device is a computer.
